# EUROPEAN PATENT SPECIFICATION

(11) **EP 1 864 351 B1**
(45) Date of publication and mention of the grant of the patent: **12.09.2012**
(21) Application number: 05852510.6
(22) Date of filing: 30.11.2005
(51) Int. Cl.: H01M 10/02, H01M 10/04, H01M 10/42, H01M 2/20, H01M 2/30

(54) **BATTERY SYSTEM ASSEMBLY**
BATTERIESYSTEMBAUGRUPPE
ENSEMBLE SYSTEME DE BATTERIE

(30) Priority: 30.03.2005 US 666421 P
(43) Date of publication of application: 12.12.2007
(73) Proprietor: Johnson Controls Technology Company, Holland, MI 49423 (US)
(72) Inventor: HANSEN, Scott, A., Holland, Michigan 49424 (US); SMITH, Nels, R., Zeeland, Michigan 49464 (US); ANDREW, Michael, G., Menomonee Falls, Wisconsin 53051 (US); DOUGHERTY, Thomas, J., Waukesha, Wisconsin 53188 (US); TAGHIKHANI, Majid, Franklin, Wisconsin 53132 (US); ANDERSON, Elisabet, A., Holland, Michigan 49424 (US)
(74) Representative: Gerstein, Hans Joachim
(86) International application number: PCT/US2005/043289
(87) International publication number: WO 2006/118612

(56) References cited:
- EP-A- 0 986 114
- US-B1- 6 403 251
- US-B1- 6 410 184
- US-B1- 6 423 441

## Description

### STATEMENT REWARDING FEDERALLY SPONSORED RESEARCH OR DEVELOPMENT

The government of the United States has rights in this invention pur-suant to Contract No. DE-FC26-95BE50425 awarded by the U.S. Department of Energy.

### CROSS-REFERENCE TO RELATED APPLICATIONS

The present application claims the benefit of U.S. Provisional Patent Application No. 60/666,421 filed March 30, 2005.

### BACKGROUND

The present inventions relate to batteries and battery systems. More specifically, the present inventions relate to batteries (e.g., lithium-ion batteries, lithium-polymer batteries, etc.) and systems using such batteries.

It is known to provide batteries for use in vehicles such as automobiles, For example, lead-acid batteries have been used in starting, lighting, and ignition applications. More recently, hybrid vehicles have been produced which utilize a battery (e-g., a nickel-metal-hydride battery) in combination with other systems (e.g., an internal combustion engine) to provide power for the vehicle.

It is generally known that lithium batteries perform differently than nickel-metal-hydride batteries. In some applications, it may be desirable to obtain the enhanced power/performance of a lithium battery. For example, lithium batteries may provide greater specific power than nickel-metal-hydride batteries. However, the application of lithium battery technology may present design and engineering challenges beyond those typically presented in the application of conventional nickel-metal-hydride battery technology.

For example, the design and management of a lithium battery system that can be advantageously utilized in a hybrid vehicle may involve considerations such as electrical performance monitoring and thermal management.

It would be desirable to provide a system that may be relatively simply and efficiently assembled. It would also be desirable to provide a system that includes a plurality of modules that may be assembled without the use of tools. It would further be desirable to provide a system in which electrical connections may be made when battery modules are assembled in the battery system. It would be desirable to provide a system and/or method that provides any one or more of these or other advantageous features.
US6403251 discloses a battery pack with multiple secure modules having open-sided pockets for temporarily retaining the modules in the pockets.

### SUMMARY

A battery systems includes a battery module that includes a plurality of cells electrically connected in series. The battery module includes a conductive element for electrically connecting the battery module to other elements in the battery system. The battery system also includes a base configured for securing the battery module in place and includes at least one element for electrically connecting the base to the conductive element of the battery module. The base includes a rotatable arm for securing the battery module in place relative to the base. The conductive element is configured to contact the at least one element for electrically connecting the base to the battery module when the rotatable arm is positioned to secure the battery module in place relative to the base.

### BRIEF DESCRIPTION OF THE DRAWINGS

FIGURE 1 is a perspective view of a battery system according to an exemplary embodiment showing a battery module ready for insertion into the battery system.

FIGURE 2 is a perspective view showing the battery system shown in FIGURE 1 with the battery module lowered into place within the battery system.

FIGURE 3 is a perspective view of the battery system shown in FIGURE 1 showing the rotation of the battery module within the battery system.

FIGURE 4 is a perspective view of the battery system shown in FIGURE 1 showing the battery module in place within the battery system and a cover being lowered over the battery modules.

FIGURE 5 is perspective view showing the cover shown in FIGURE 4 provided on the battery system.

FIGURES 6-8 are plan view of a portion of the battery system shown in FIGURE 1 illustrating the electrical connection of the battery module.

FIGURE 9 illustrates a portion of a battery system including a battery module similar to that shown in FIGURE 1 that includes a connector according to another exemplary embodiment.

FIGURE 10 is a partial cutaway plan view of the battery system shown in FIGURE 9 illustrating the positioning of the battery module according to an exemplary embodiment.

FIGURE 11 is a perspective view of the battery system shown in FIGURE 9 with the battery module provided in its final position.

FIGURE 12 is a perspective view of a portion of a battery system showing a battery module being put in place according to another exemplary embodiment.

FIGURE 13 is another perspective view of the portion of the battery system shown in FIGURE 12.

FIGURE 14 is a perspective view of a battery module having connectors configured for attachment to mounting structures according to another exemplary embodiment.

FIGURES 15-16 are enlarged views showing the mounting structures illustrated in FIGURE 14.

FIGURE 17 is a cross-sectional view of a mounting structure similar to that shown in FIGURES 15-16 according to another exemplary embodiment.

FIGURES 18-21 illustrate a battery module having features for locking the battery module in place according to another exemplary embodiment.

FIGURES 22-24 illustrate a battery module having features for retaining the battery module in place according to another exemplary embodiment.

FIGURE 25 is a perspective view of a battery module having a handle being positioned in a battery base according to an exemplary embodiment.

FIGURES 26-28 illustrate a battery module having features for retaining the battery module in place according to another exemplary embodiment.

FIGURE 29 is a perspective view of a connector that may be used to secure a battery module in place according to another exemplary embodiment.

FIGURE 30 is a perspective view of a connector that may be used to secure at battery module in place according to another exemplary embodiment.

FIGURES 31-32 illustrate a battery module having features for retaining the battery module in place according to another exemplary embodiment.

FIGURES 33-36 illustrate a battery module having various latching mechanisms for retaining the battery module in place according to other exemplary embodiments.

### DETAILED DESCRIPTION

According to an exemplary embodiment, a battery system including a plurality of batteries or cells (e.g., a lithium-ion cell, a lithium-polymer cell, etc.) is provided. It should be noted that while particular exemplary embodiments are shown and described in the present disclosure, the features described may be utilized with batteries or cells of any presently known configuration or other configuration (or chemistry) that may be developed in the future.

One or more batteries (or cells) may be provided in an assembly or module comprising a plurality of such batteries according to an exemplary embodiment. According to an exemplary embodiment in which a module including a plurality of batteries is provided, the module may be included in a system that include a plurality of battery modules of any presently known configuration or any other configuration (or chemistry) that may be developed in the future.

Various exemplary embodiments of lithium batteries (e.g., oval-shaped lithium batteries) and lithium battery systems are shown and described in U.S. Patent Application No.1 10/976,169. filed October 28, 2004, Publication nr. US2005174092 (It is intended that the batteries, modules, components and other features of the present system may be used in conjunction with features disclosed in U.S. Patent Application No. 10/976,169).

According to various exemplary embodiments, members or elements in the form of connectors are provided on a battery module to allow the battery module to be inserted and retained within a battery system (e.g., attached to a battery tray or other structure to be provided within vehicle such as an automobile). It should be understood by those of skill in the art reviewing the present disclosure that while particular exemplary embodiments are shown and described herein, the concepts disclosed should not be construed as limited to these particular exemplary embodiments, and that various other exemplary embodiments as may be apparent to those reviewing this disclosure are intended to be included within the scope of the present inventions.

According to an exemplary embodiment, a member or element such as a base is provided within a vehicle for retaining one or more battery modules (e.g. for a lithium-ion battery system). According to another exemplary embodiment, the member or element (e.g., a base) may be assembled separately from the vehicle and inserted therein subsequent to providing the battery modules within the member or element. According to an exemplary embodiment, the member or element (e.g., a base) may act as a "docking station" into which one or more battery modules (or individual battery cells) may be provided (e.g., to make an electrical connection with the battery module without the need for a separate electrical connection operation during battery system assembly). In this manner, a battery system may be provided which allows for a relatively quick and efficient assembly of the battery system.

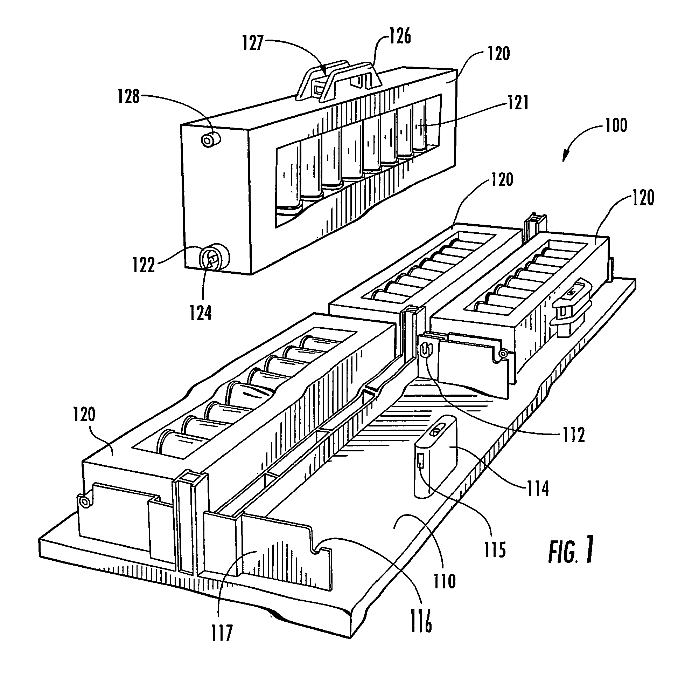

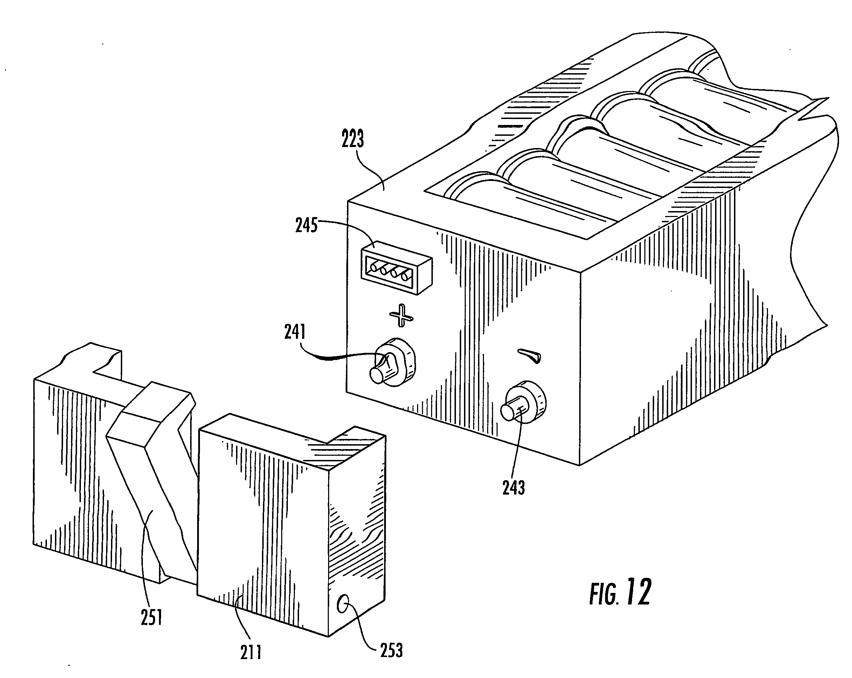

FIGURES 1 through 8 illustrate a battery system 100 including a structure or component 110 in the form of a base or tray (referred to herein for simplicity as a base, although other structures may also be used according to other exemplary embodiments; it should also be noted that elements referred to herein as a "base" or "tray" may be a portion of a base or tray, such as the base 211 shown in FIGURE 12) and a plurality of battery modules 120 according to an exemplary embodiment. While FIGURE 1 illustrates a battery system having four modules, it should be understood that according to other exemplary embodiments, any number of battery modules may be included in a battery system depending on a variety of factors, including the amount of power to be delivered, space constraints, and others. For ease of reference, features of the modules 120 will be described with respect to a single module, although it should be understood that such features may be provided for all of the modules used with the battery system 100 or a subset thereof.

The module 120 includes a plurality of individual cells or batteries 121 (e.g., lithium-ion cells). According to an exemplary embodiment, the module 120 includes twelve cells 121. According to other exemplary embodiments, a different number of cells may be provided in the module.

As shown in FIGURE 1, the module 120 includes a member or element 122 in the form of a mounting structure for coupling or attaching the module 120 to the base 110. According to an exemplary embodiment, the mounting structure 122 at least partially circumscribes a terminal 124 for the module 120. The terminal 124 is configured to allow electrical contact to be made between the module 120 and other modules in the battery system 100 (and, consequently, to a vehicle electrical system).

As shown in FIGURE 1, the base 110 includes a member or element 112 in the form of a mounting structure that is configured to receive the mounting structure 122 and terminal 124 provided on the module 120 (e.g., the terminal 124 is received in the slot defined by the mounting structure 112). According to an exemplary embodiment, two such mounting structures 112 are provided, such that one is provided at each of the opposite ends of the module 120 when the module 120 is put in place during assembly.

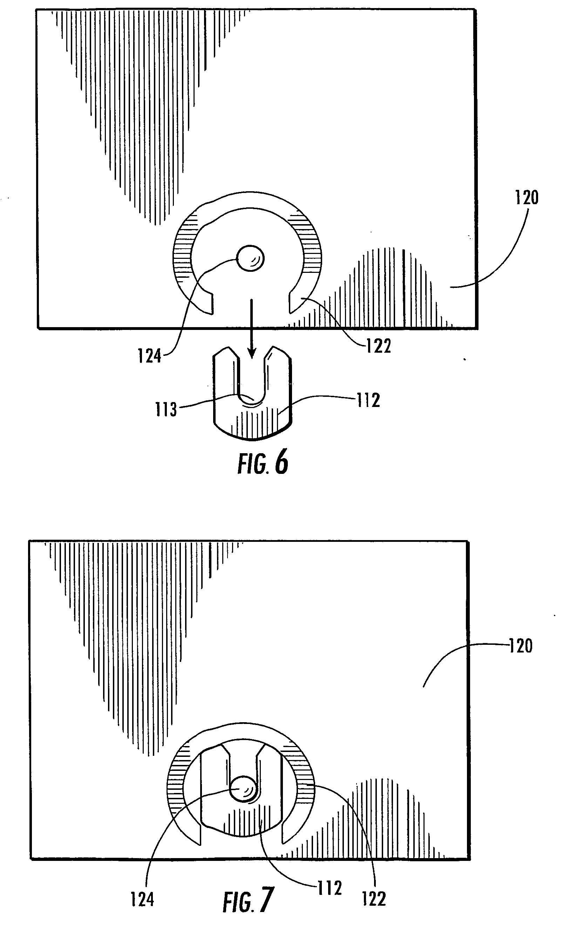

The mounting structure 112 of the base 110 may be made of a conductive material such as a metal. In this manner, when the module 120 is coupled or attached to the base 110, the terminal 124 will contact the mounting structure 122 provided in the base 110 (shown in the form of a mounting member or structure in FIGURES 1 and 6, for example) to electrically couple the module 120 to other modules in the battery system 100.

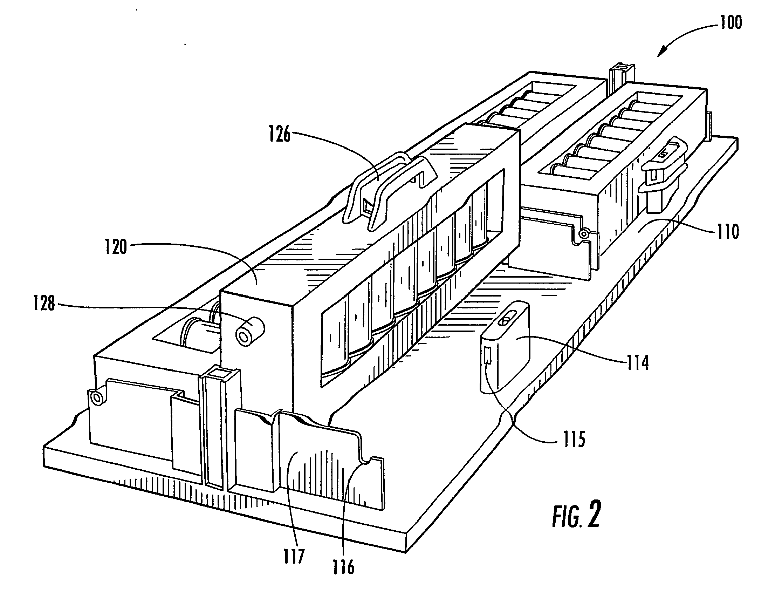

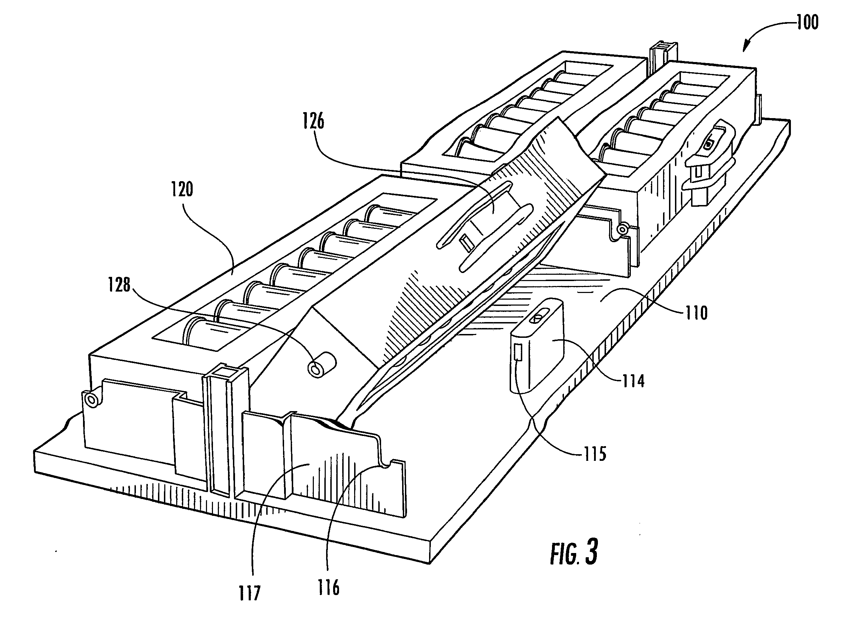

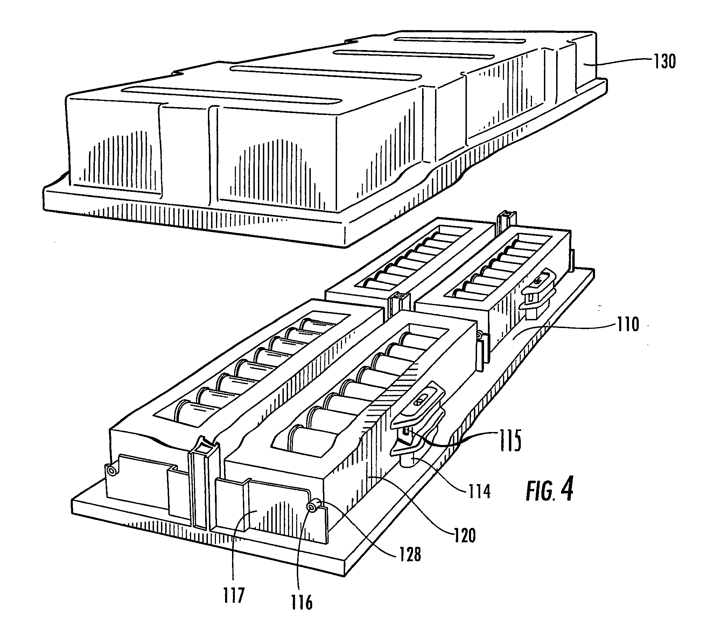

As shown in FIGURE 2, the module 120 is coupled to the base 110 by providing the terminal 124 of the module 120 within the mounting structure 112 provided on the base 110. As shown in FIGURE 3, the module 120 is then rotated about the terminal 124. A handle 126 interlocks or mates with a member or element 114 in the form of an extension which extends upward from the base 110. The handle 126 may include a feature 127 such as a gripping surface to allow for the relatively easy gripping of the handle 126 by an installer. The extension 114 may include one or more features 115 configured to lock the module 120 in place flat against the base 110 as that shown in FIGURE 4. As can be seen from FIGURES 3 and 4, the module also includes a member or element 128 in the form of an extension that is configured to be received within a cutout 116 provided in a feature 117 such as a wall or divider provided on the base 110 to provide a relatively secure fit between the module 120 and the base 110. The cutout 116 may be configured to relatively secure the member 128 therein (e.g., in gripping fashion) or may simply provide a location on which the member 128 may rest (e.g., with the securing of the module 120 to be accomplished by interaction of the features 115 with the handle 1 26).

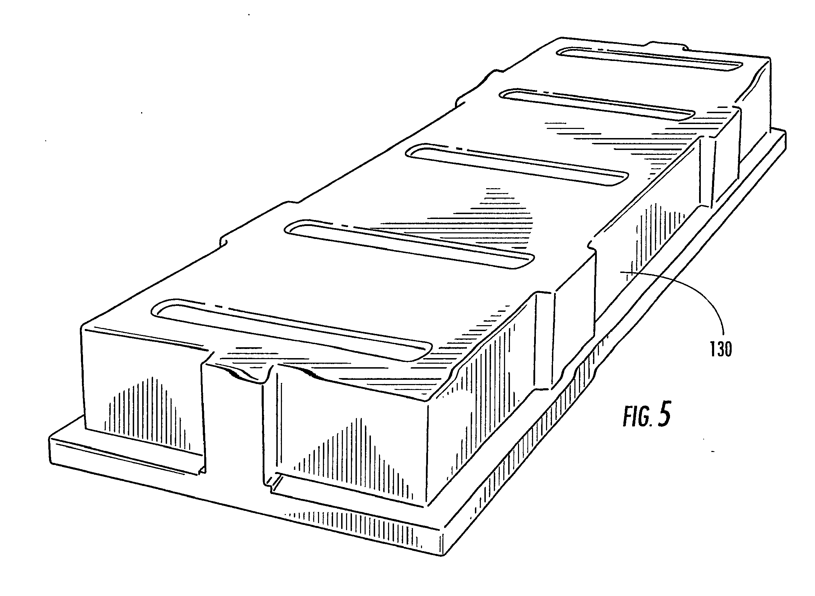

FIGURES 4 and 5 illustrate a cover or shroud 130 configured for use with the battery system 100. The cover acts to shield the individual battery modules 120 when the battery system 100 is provided within a vehicle. The cover 130 may be made of a polymeric material or other suitable material according to various exemplary embodiments. While FIGURES 4 and 5 illustrate a single cover that acts to cover all of the battery modules in the battery system 100, according to other exemplary embodiments, individual covers may be provided for each of the modules in the battery system. Additionally, according to other exemplary embodiments, the cover may include other features such as electrical connectors, effluent routing systems, and/or other features.

FIGURES 6-8 illustrate the coupling of the module 120 to the base 110 in greater detail. As shown in FIGURE 6, the module 120 is lowered toward the mounting structure 122 provided on the base 110 such that the terminal 124 is in alignment with an opening 113 provided in the mounting structure 112 provided on the base 110.

As shown in FIGURE 7, when the module 120 is lowered such that the terminal 124 of the module 120 is seated within the opening 113, the mounting structure 112 of the base is received within the mounting structure 122 of the module 120. According to other exemplary embodiments, the mounting structure of the module may be received within the mounting structure of the base.

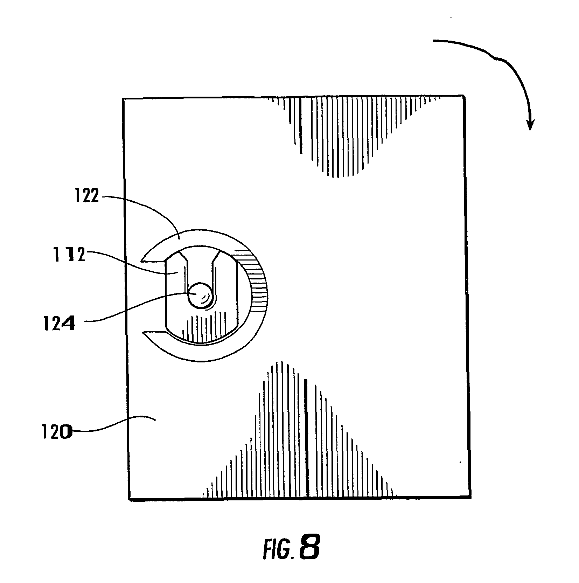

As shown in FIGURE 8, once the module 120 is provided such that the terminal 124 is seated within the mounting structure 112 of the base 110, the module 120 is rotated about the terminal 124 to lock the mounting structure 122 of the module with the mounting structure 112 of the base 110. In this manner, a relatively secure connection between the module 120 and the base 110 may be provided. Additionally, because the mounting structure 112 of the base 110 is made of a conductive material such as a metal, the electrical connection of the module 120 to other modules in the battery system 100 and to the vehicle electrical system may be maintained in a relatively secure manner.

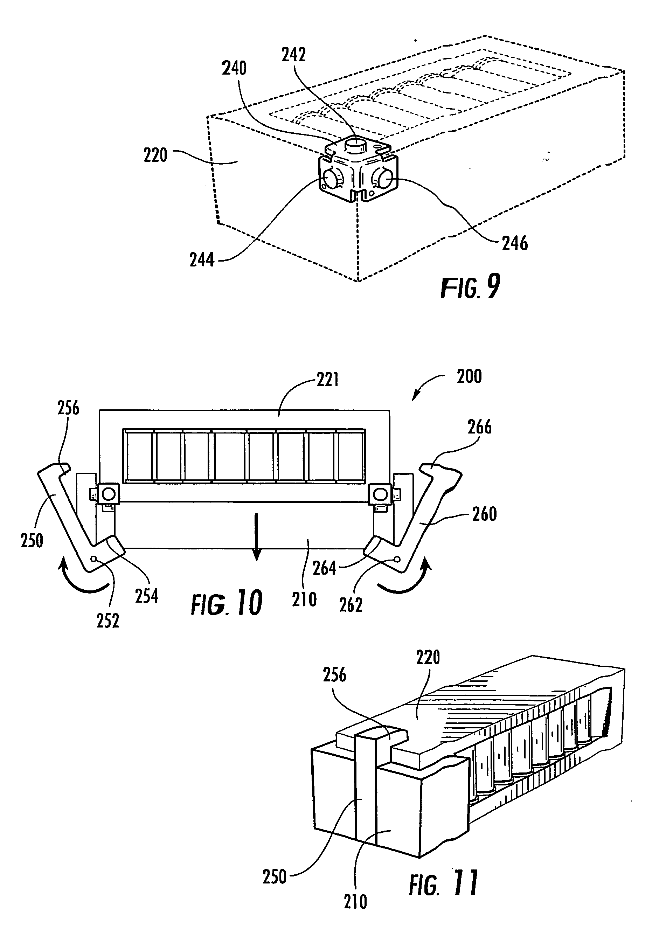

FIGURES 9-11 illustrate a portion of a battery system 200 according to another exemplary embodiment. As shown in FIGURE 9, a battery module 220 (e.g., similar to that shown in FIGURE 1 as module 120) includes a plurality of individual cells or batteries 221 (e.g., twelve cells). Any number of battery modules may be provided in the battery system 200 as may be desired, with each of the modules having any number of desired cells. According to an exemplary embodiment, four modules are provided in the battery system 200, each of which includes twelve cells.

The module 220 is also configured such that when the module 220 is assembled with a base, simultaneous mechanical and electrical connections are made such that the need for a separate electrical connection step in the manufacturing process is eliminated. For example, according to an exemplary embodiment shown in FIGURES 10-11, a base 210 to which the module 220 is to be coupled includes one or more members or elements in the form of arms. Such arms are shown as arms 250 and 260 in FIGURES 10-11. As the module 220 is lowered into place within the battery system 200, the module 220 contacts lower portions 254 and 264 of the arms 250 and 254 such that the arms 250 and 260 rotate about pivot points 252 and 262. Such rotation moves upper portions 256 and 266 of the arms 250 and 260 toward the module 220. As shown in FIGURE 11, when the module 220 is completely in place within the battery system 200, the top portions 256 and 266 of the arms 250 and 260 act to secure the module 220 in place within the battery system 200 (e.g., the top portions 256 and 266 contact the top of the module 220).

As shown in FIGURE 9, a member or element 240 in the form of a connector (hereafter referred to as "the connector 240") is provided on at least one of the corners of the module 220. According to an exemplary embodiment, such a connector is provided on at least two of the corners of the module 220 (e.g., to act as "positive" and "negative" terminals for the module 220). The connector 240 is a corner block connector that allows for multiple axis attachment of the module 220 within a battery system (such as battery system 200). For example, as shown in FIGURE 9, the connector 240 includes three extensions 242, 244, and 246 that are arranged orthogonally which may engage or contact a feature (not shown) provided in the based to provide an electrical connection between the module 220 and the base 210.

One advantageous feature of the embodiment shown and described with respect to FIGURES 9-11 is that the connectors may allow the module to be used with a variety of different bases, and in a variety of orientations (e.g., by providing connectors on three axes of the module, the battery module may be used with a wider variety of battery systems then may otherwise be possible).

FIGURES 12-13 illustrate the assembly of a battery system according to another exemplary embodiment. A battery module 223 including a plurality of batteries or cells 225 includes on its outer surface two terminals 241 and 243 (positive and negative terminals, respectively) and a pin connector 245. The pin connector 245 may provide a data and/or electrical connection between the battery module and interface between the battery module and a battery module controller (not shown).

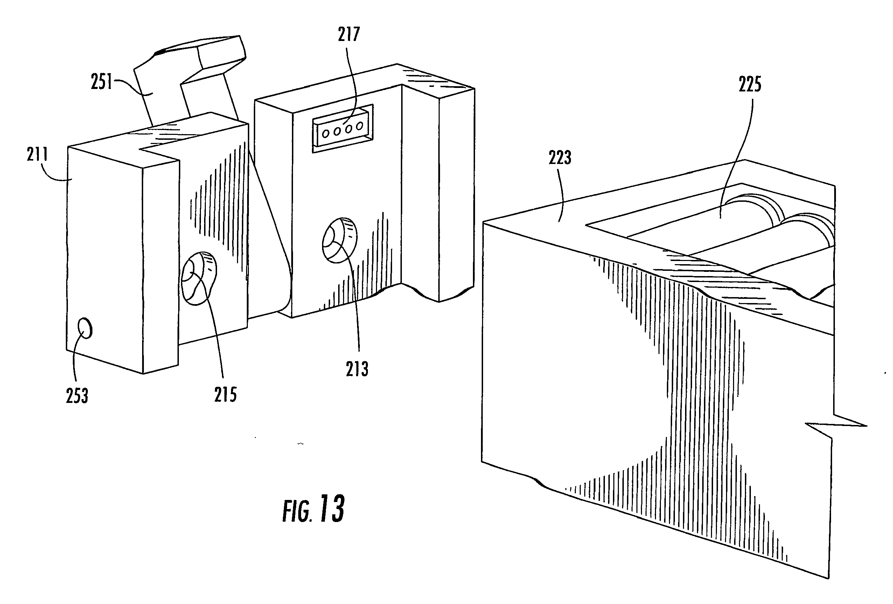

As shown in FIGURE 13, a base 211 includes features 213, 215, and 217 for engaging or mating with the terminals 241, 243 and pin connector 245. According to this embodiment, the module may be placed in position by sliding it toward the base 211 to couple the terminals 241, 243 and pin connector 245 to the features 213, 215, and 217 of the base 211. An arm 251 may be rotated about a pivot 253 such that a top portion thereof contacts a surface of the module 223. According to an exemplary embodiment, the arm 251 may be spring loaded such that it is biased toward the module 223 (e.g., the arm must first be moved away from the module to put the module in place, after which the arm is "let go" such that it clamps against a surface of the module 223 to keep it in place).

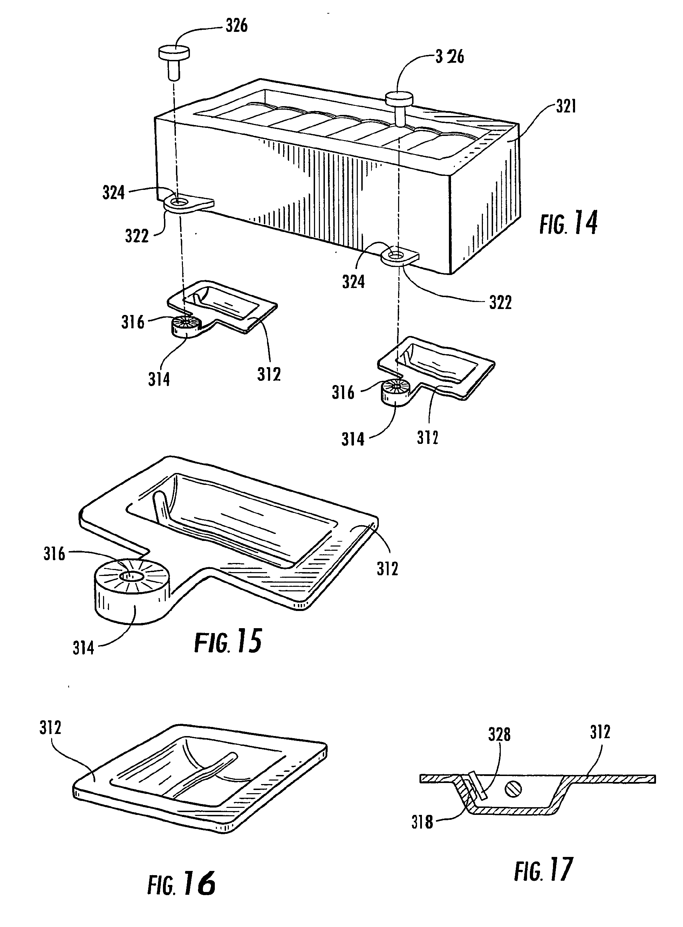

FIGURES 14-17 illustrate portion of a battery system 300 that includes a module 320 having a plurality of cells or batteries 321 according to another exemplary embodiment. Members or elements 322 in the form of extensions are provided on the module 320 that extend from a surface thereof. Apertures or holes 324 are provided in the extensions 322 to allow the module 320 to be mounted to mounting structures 312 provided as part of a base 310.

As shown in FIGURES 15-16, the mounting structures 312 provided in the base 310 are configured similar to seat mounting structures in vehicles. Such mounting structures comprise a cutout or depression into which a feature provided on the battery module may be seated. According to an exemplary embodiment, the extensions 322 provided on the module 320 may be configured to be coupled to extensions 314 provided on the mounting structures 312 of the base 310 (e.g., by inserting fasteners 326 through apertures 324 provided in the extensions 322 of the module and apertures 316 provided in the extensions 314 of the mounting structures 312 of the base 310).

The module 320 shown in FIGURES 14-16 is also configured such that the mechanical connection securing the module in place in the battery system 300 is performed substantially simultaneously with an electrical connection that electrically connects the module 320 to other modules in the battery system 300 and to the vehicle electrical system. For example, according to one exemplary embodiment, the extensions 322 of the module 320 may act as terminals for the module 320 such that the connection between the extensions 322 of the module and the extensions 314 of the mounting structures 312 may act to electrically couple the module 320 to the battery system 300.

According to another exemplary embodiment shown in FIGURE 17, the electrical coupling of the battery module 320 may be accomplished by means of a feature 328 provided on the module 320 that may contact an electrical contact 318 provided within the mounting structure 312 when the module 320 is provided in the base 310. For example, an electrically conductive member (shown as feature 328 in FIGURE 17) extending from the module 320 and configured to couple the module 320 to the mounting structure 312 may be provided such that when the module 320 is provided in place, the electrically conductive member makes contact with the electrical contact 318 provided as part of the mounting structure 312. In this manner, current may be conducted from the battery module 3 20 to the mounting structure 312, and hence to other modules in the battery system 300 and to the vehicle electrical system.

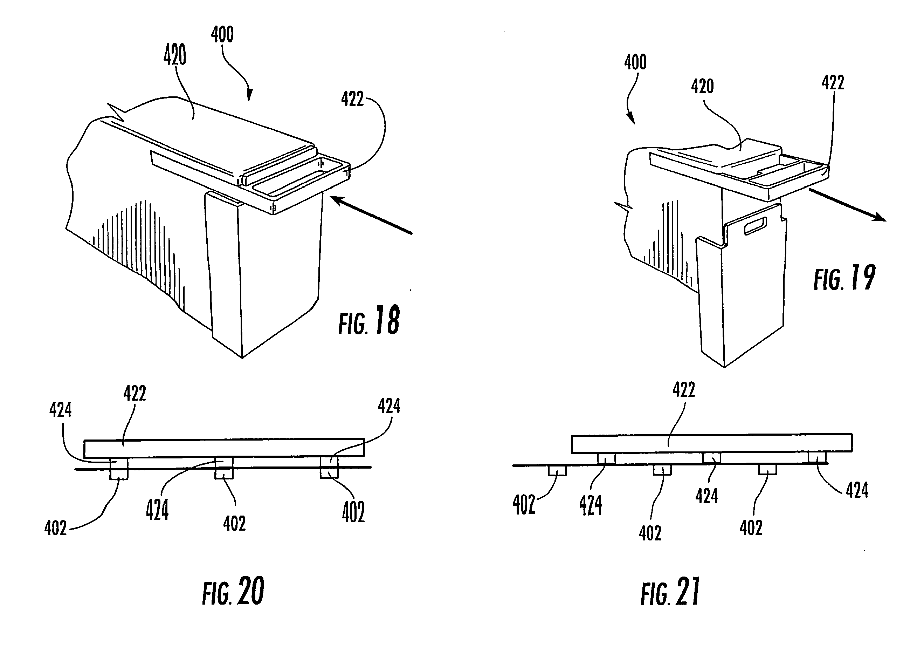

FIGURES 18-21 illustrate a battery system 400 according to another exemplary embodiment. As shown in FIGURES 18-21, a battery module 420 is provided that includes a feature 422 such as a handle is utilized to make an electrical connection between the module 420 and other modules in the battery system 400 (and to the vehicle electrical system). As shown in FIGURE 20, when the handle 422 of the module 420 is moved into a "locked" position in which the handle is coupled to a mounting structure of the base (as shown in FIGURE 18), contacts 424 on the handle 422 make contact with contacts 402 provided for the battery system 400. When the handle 422 is pushed into the "unlocked" position in which the handle is not coupled to the mounting structure (as shown in FIGURE 19), the contacts 424 for the handle 422 and the contacts 402 for the battery system 400 are no longer in alignment (as shown in FIGURE 21).

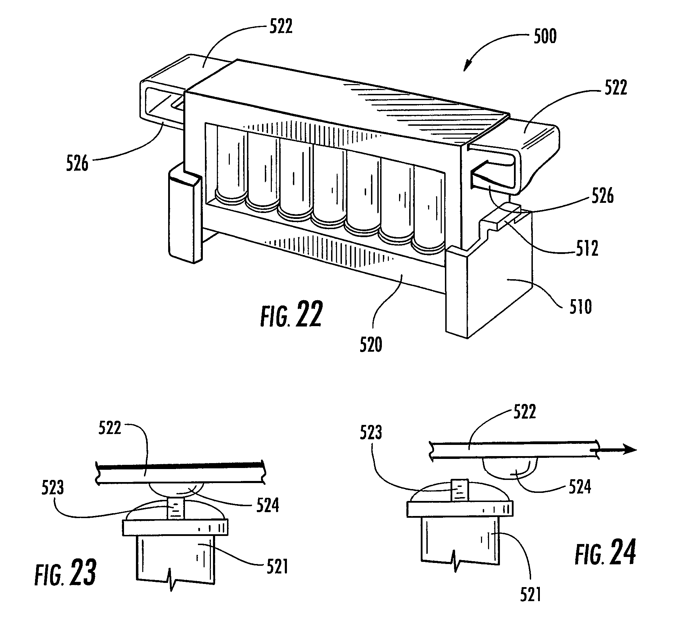

FIGURES 22-24 illustrate a battery system 500 including a module 520 according to another exemplary embodiment having handles 522 that include contacts 524 that act to connect the module 520 to other elements of the battery system 500 (e.g., other modules, etc.) when the handles are pushed toward the battery module 522. As shown in FIGURE 23, when the handles 522 are moved to the "locked" or "connected position," the contacts 524 are provided in contact with terminals 523 of an individual cell or battery 521 included in the module 520 (i.e., a circuit is completed with the cells of the battery and the battery system 500). A lower portion 526 of the handle is configured to engage a feature 512 (e.g., a mounting structure) provided on a base 510 to mechanically secure the module in place. Thus, when the handles are moved to the "locked" or "connected position," electrical contact is made between the module 520 and the battery system 500 substantially simultaneously with the mechanical interconnection (e.g., interlocking) of the handle 522 and the feature 512 of the base 510 (and, on the contrary, such contact is broken when the handle is moved to the "unlocked" or "disconnected" position).

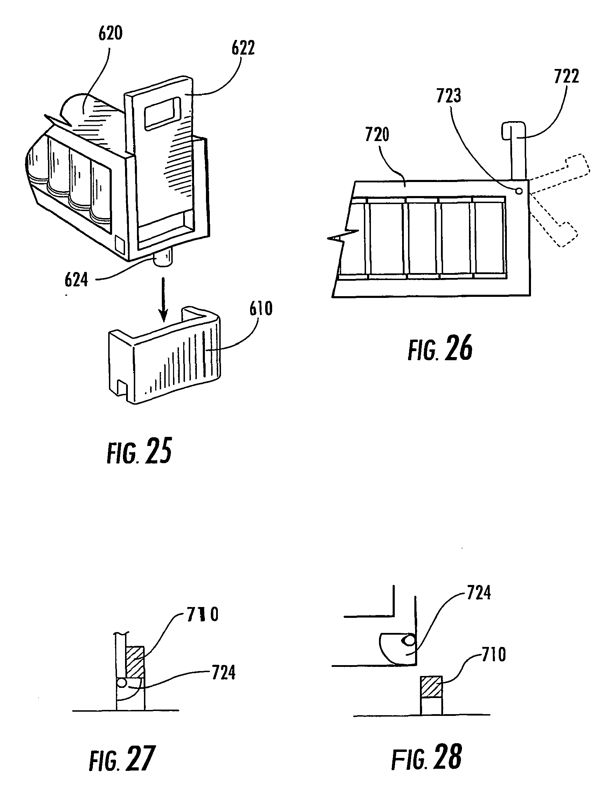

FIGURES 25-36 illustrate various other configurations according to various exemplary embodiments for connecting battery modules to battery systems and for making electrical contact between the battery modules and the battery systems, the benefits of which will be apparent to those of skill in the art reviewing such figures.

For example, FIGURE 25 illustrates a battery module 620 that includes a handle 622 and a connector 624 that may engage a feature (not shown) provided in a base 610 to electrically and mechanically couple the module 620 to the base 610.

FIGURES 26-28 illustrate a battery module 720 having a handle 722 that is rotatable about a pivot point 723. Movement of the handle between a first position and a second position may act to move a cam lock 724. In a first position, the cam lock 724 engages a portion of a base 710 to secure the module to the base, as shown in FIGURE 27. In a second position, the cam lock 724 may be disengaged from the portion of the base 710 such that the module 720 may be attached or detached from the base 710. Electrical connections may be made by virtue of features such as connectors included on the handle 722 or elsewhere on the module.

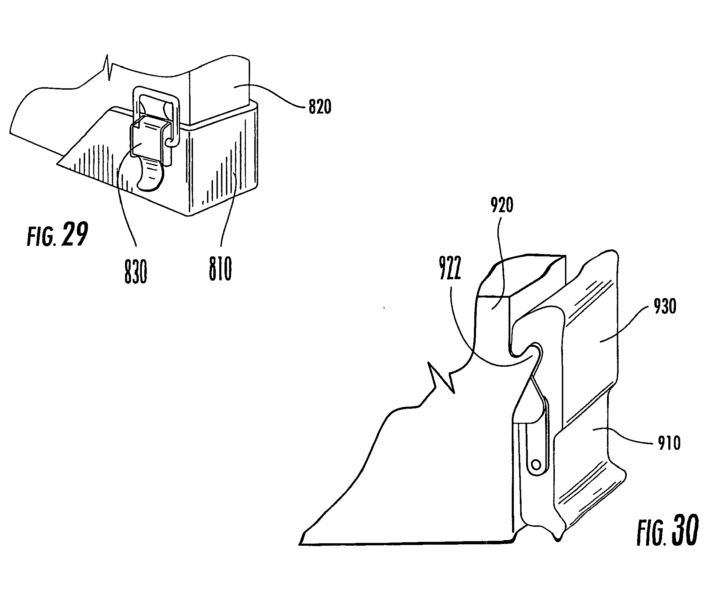

FIGURE 29 illustrates a battery module 820 secured to a base 810 using an overcenter latching device 830. It will be appreciated by those reviewing this disclosure that the latching device may be provided either on the base or on the module (with the corresponding feature to be engaged being provided on the other of the base and module).

FIGURE 30 illustrates a battery module 920 having a feature 922 configured for engagement by a latch 930 coupled to a base 910. The latch 930 is intended to secure the module 920 in place relative to the base 910.

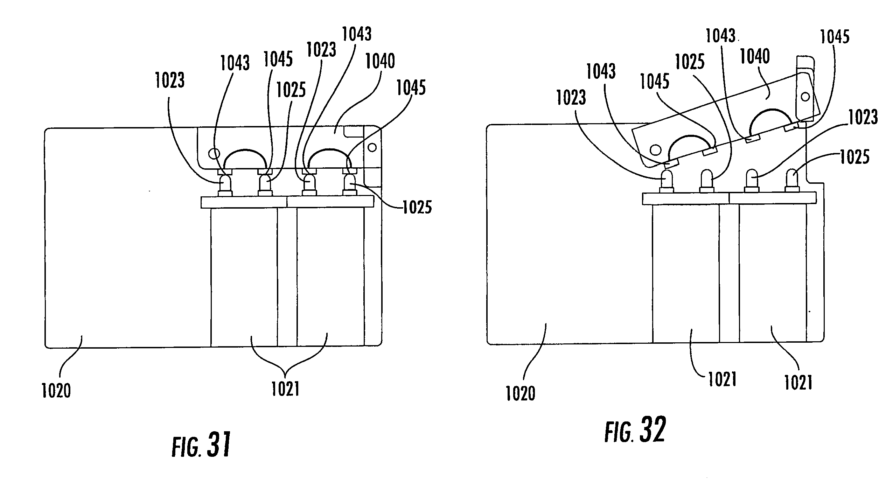

FIGURES 31-32 illustrate a battery module 1020 having a plurality of cells or batteries 1021, each of which includes terminals 1023 and 1025. A hold-down 1040 is provided with contacts 1043 and 1045 such that when the hold-down 1040 is in position (i.e., to lock the module 1020 in place), contact is made between the terminals 1023 and 1025 and the contacts 1043 and 1045, thus electrically connecting the module 1020 to the battery system.

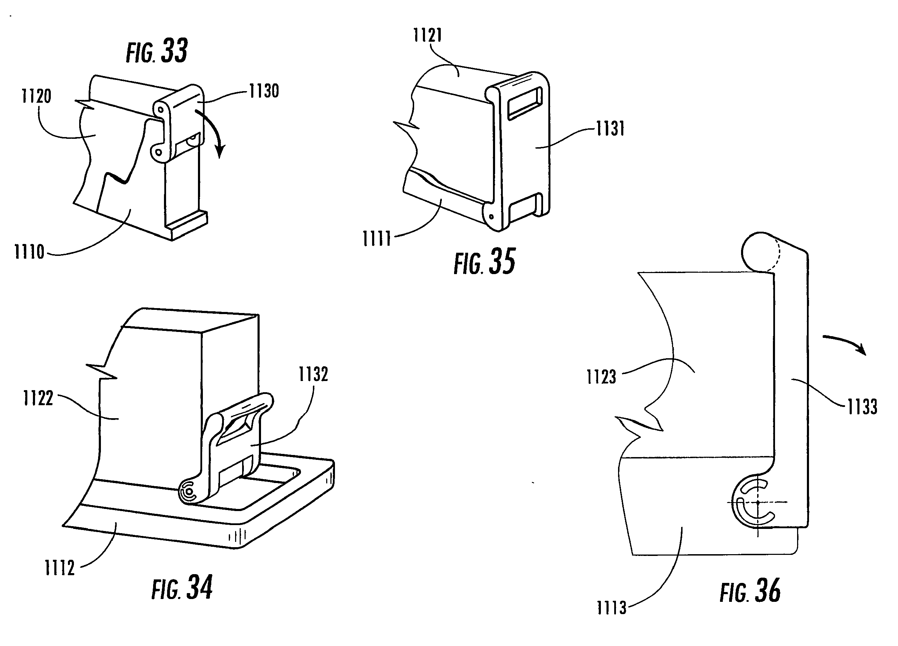

FIGURES 33-36 illustrate various exemplary embodiments in which battery modules (e.g., modules 1120, 1121, 1122, and 1123) are secured in place to a base (e.g., bases 1110, 1111, 1112, 1113) using a latch such as an over center latch or a partial turn latch (e.g., latches 1130, 1131, 1132, 1133). Such latches are intended to mechanically secure the modules in place relative to the base. Electrical connection between the modules and bases may be provided by features such as contacts provided on the latches or that may be included elsewhere on the modules and/or bases.

It will be appreciated by those of skill in the art that various exemplary embodiments are disclosed herein. Such embodiments relate generally to the coincidental method for attachment and electrical connection of batteries (e.g., battery modules) to a motor vehicle, more specifically for lithium-ion and capacitor-type batteries. For example, according to an exemplary embodiment such as that shown in FIGURE 1, a base of battery module is already provided in a vehicle (like a docking station), and the rest of the components snap into it (e.g. , with a locking mechanism).

According to an exemplary embodiment, a termination design may be provider to allow the modules to be put into the vehicle in any of three orthogonal orientations (e.g., as shown in FIGURE 9, in which three extensions or terminals are provided on the corner of the battery module may be utilized). Plug and play venting may be provided in the same area.

According to other exemplary embodiment s, a hold-down mechanism (e.g., such as that shown in FIGURE 11) may be used that is similar to the manner in which computer memory is secured to a motherboard. According to still other exemplary embodiments, handles or other components may be integrated into the battery module to allow any one to grasp and remove the unit. Finger grooves or grips may be provided to allow easy grasping be installer, and the handles may have dual functionality - acting as both a handle and electrical connector.

According to yet still other exemplary embodiments (e.g., as shown in FIGURES 14-17), a hold-down mechanism similar to that used for vehicle seats may be used (according to one exemplary embodiment, an electrical connection may be made when the connector is put into a trough; it pivots downward into the trough to lock it in, then it is bolted down (the bolt could act as the connector).

According to another exemplary embodiment, a hold-down mechanism that connects to the terminals of the battery pack may be provided. According to this embodiment, the battery module may be dropped into the connection hold-down mechanism and rotated into place, which may act to lock it in place due to the engagement of features in a base with features on the battery module (see, e.g. FIGURE 1). The mounting piece can be oriented in any direction so that you can lock it into place either in the upright position or in the laying flat position. On the other side of the module (e.g., the top of the module) could be another type of connector that provides the effluent exhaust system to lock that portion of the module into position. Alternatively, it could be a separate locking mechanism. The locking mechanism could latch into the integral carrying handle in the battery. This is a plug-and-play design that has minimal complexity. This acts as the main hold-down mechanism, and a latch could be used on the other side.

According to another exemplary embodiment, a hinged door may be provided for the group of modules (e.g., the modules would be arranged side by side, and one side would connect to a connector). The door is on the other end, and includes contacts to complete the circuit with the terminals of each module. The door may also include sense leads, etc. The case can be oriented in any direction (modules could lay flat, could be up and down, etc.). The case could also include pins to guide the modules into place.

The various exemplary embodiments disclosed and described herein may include or exhibit various advantageous features. For example, a battery system including one or more battery modules (each of which includes one or more lithium batteries or cells) may be configured to allow for relatively simple and efficient assembly. In this manner, substantially simultaneous (e.g., coincident) mechanical and electrical connection maybe made between the battery modules and the holder in which they are placed (e.g., a base). Accordingly, the need to perform separate mechanical and electrical connections may b e eliminated, thus reducing both labor costs and the number of components (e.g., fasteners, connectors, etc.) that might otherwise be required.

The terms "coupled" and "connected" as used in the this disclosure and in the claims which follow (both in the sense of an electrical connection and a mechanical connection) are intended to be construed broadly to encompass both direct and indirect coupling and connection, unless otherwise indicated.

It is important to note that the construction and arrangement of the system as shown in the various exemplary embodiments is illustrative only. Although only a few embodiments of the present inventions have been described in detail in this disclosure, those skilled in the art who review this disclosure will readily appreciated that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, elements shown as integrally formed may be constructed of multiple parts or elements, the position of elements may be reversed or otherwise varied (e.g., the variable temperature resistor may be provided adjacent a negative terminal of a battery), and the nature or number of discrete elements or positions may be altered or varied (e.g., a plurality of resistors may be provided in place of a single resistor). Accordingly, all such modifications are intended to be included within the scope of the present invention as defined in the appended claims. The order or sequence of any process or method steps may be varied or re-sequenced according to alternative embodiments. Other substitutions, modifications, changes and omissions may be made in the design, operating conditions and arrangement of the various exemplary embodiments without departing from the scope of the present inventions.

## Claims

1. A battery system comprising:
a battery module (120,1120) comprising a plurality of lithium-ion cells electrically connected in series, the battery module comprising a conductive element (1023,1025) for electrically connecting the battery module to other elements in the battery system;
a base (110) configured for securing the battery module in place and comprising at least one element for electrically connecting the base to the conductive element of the battery module;
wherein the base comprises a rotatable arm (250, 260) for securing the battery module in place relative to the base;
wherein the conductive element is configured to contact the at least one element for electrically connecting the base to the battery module when the rotatable arm is positioned to secure the battery module in place relative to the base.

2. The battery system of Claim 1, wherein the plurality of cells in the battery module have a generally oval shape.

3. The battery system of Claim 1, wherein the rotatable arm is configured for movement between a first position in which it does not secure the battery module in place and a second position in which it secures the battery module in place.

4. The battery system of Claim 3, wherein the rotatable arm is configured for movement between the first position and the second position when the battery module contacts a portion of the rotatable arm.

5. The battery system of Claim 3, wherein the rotatable arm is biased toward the second position.

6. The battery system of Claim 1, wherein the at least one element for connecting the battery module to the battery system comprises a connector provided at a corner of the battery module.

7. The battery system of Claim 6, wherein the connector comprises a plurality of extensions arranged orthogonally at the corner of the battery module.

8. The battery system of Claim 7, wherein the battery module comprises two connectors comprising a plurality of extensions arranged orthogonally, a first of the two connectors being provided at a first corner of the battery module and a second of the two connectors being provided at a second corner of the battery module.

9. The battery system of Claim 8, wherein the first connector is a positive terminal for the battery module and the second connector is a negative terminal for the battery module.

10. The battery system of Claim 1, wherein the battery module comprises a pin connector configured for connection to a portion of the base.

11. The battery system of Claim 1, wherein the conductive element comprises a terminal extending from the battery module.

12. The battery system of Claim 11, wherein the at least one element for electrically connecting the base to the battery module comprises an aperture configured to receive the terminal therein.

13. The battery system of Claim 1, wherein the battery module comprises twelve cells,

14. A battery system, comprising:
a battery module (120, 1120) comprising a plurality of lithium-ion cells electrically connected together and at least one terminal extending from the battery module;
a base configured to provide an electrical connection with the battery module when the battery module is mechanically coupled to the base, at least one of the base and the battery module comprising a mounting structure (112, 122, 312) configured for movement from a first position to a second position, the mounting structure configured to provide both electrical and mechanical coupling between the base and the battery module when the mounting structure is in the second position,

15. The battery system of Claim 14, wherein the mounting structure comprises a slot for receiving the at least one terminal.

16. The battery system of Claim 15, wherein the battery module comprises the mounting structure configured for movement from a first position to a second position, the mounting structure provided proximate the at least one terminals, wherein the mounting structure of the battery module is configured to mechanically interlock with a mounting structure of the base.

17. The battery system of Claim 16, wherein the mounting structure of the base is configured to mechanically interlock with the mounting structure of the battery module when the battery module is rotated relative to the base about the at least one terminal.

18. The battery system of Claim 17, wherein the battery module comprises a handle and the base comprises an extension configured to engage at least a portion of the handle when the battery module is secured to the base.

19. The battery system of Claim 14, wherein the mounting structure is a latch.

20. The battery system of Claim 14, wherein the battery module comprises an extension for coupling to the base and the base comprises a contact for making an electrical contact with the at least one terminal.

21. The battery system of Claim 14, wherein the battery module comprises a handle configured for movement relative to the battery module, the handle configured to interlock with the base and comprising at least one contact for electrically connecting the at least one terminal to the base.

22. The battery system of Claim 21, wherein the at least one terminal is a terminal of a cell included in the module.

23. The battery system of Claim 21, wherein the handle comprises a cam lock configured to engage the mounting structure of the base.

24. The battery system of Claim 14, wherein the mounting structure comprises a latch.

25. The battery system of Claim 14, wherein the mounting structure comprises a hold-down that comprises a plurality of contacts for contacting a plurality of terminals of the battery module.

26. The battery system of Claim 14, wherein the battery module comprises twelve cells.

## Patentansprüche

1. Ein Batteriesystem aufweisend:
ein Batteriemodul (120, 1120), das eine Vielzahl von Lithium-lonen-Zellen aufweist, die elektrisch in Reihe geschaltet sind, wobei das Batteriemodul ein leitfähiges Element (1023, 1025) zum elektrischen Verbinden des Batteriemoduls mit anderen Elementen in dem Batteriesystem aufweist;
eine Basis (110), die zur Positionssicherung des Batteriemoduls ausgelegt ist und wenigstens ein Element zum elektrischen Verbinden der Basis mit dem leitfähigen Element des Batteriemoduls aufweist;
wobei die Basis einen rotierbaren Arm (250, 260) zur Positionssicherung des Batteriemoduls relativ zur Basis aufweist;
wobei das leitfähige Element dazu ausgelegt ist, das wenigstens eine Element zum elektrischen Verbinden der Basis mit dem Batteriemodul zu kontaktieren, wenn der rotierbare Arm zur Positionssicherung des Batteriemoduls relativ zu der Basis positioniert ist.

2. Das Batteriesystem von Anspruch 1, wobei die Vielzahl von Zellen in dem Batteriemodul eine im Wesentlichen ovale Form haben.

3. Das Batteriesystem von Anspruch 1, wobei der rotierbare Arm für eine Bewegung zwischen einer ersten Position, in der er das Batteriemodul nicht positionssichert, und einer zweiten Position, in der er das Batteriemodul positionssichert, ausgelegt ist.

4. Das Batteriesystem von Anspruch 3, wobei der rotierbare Arm für eine Bewegung zwischen der ersten Position und der zweiten Position ausgelegt ist, wenn das Batteriemodul einen Teil des rotierbaren Arms kontaktiert.

5. Das Batteriesystem von Anspruch 3, wobei der rotierbare Arm in Richtung der zweiten Position vorbelastet ist.

6. Das Batteriesystem von Anspruch 1, wobei das wenigstens eine Element zum Verbinden des Batteriemoduls mit dem Batteriesystem einen Verbinder aufweist, der an einer Ecke des Batteriemoduls vorgesehen ist.

7. Das Batteriesystem von Anspruch 6, wobei der Verbinder eine Vielzahl von Verlängerungen aufweist, die orthogonal an der Ecke des Batteriemoduls angeordnet sind.

8. Das Batteriesystem von Anspruch 7, wobei das Batteriemodul zwei Verbinder aufweist, die eine Vielzahl von Verlängerungen aufweisen, die orthogonal angeordnet sind, wobei ein erster der zwei Verbinder an einer ersten Ecke des Batteriemoduls vorgesehen ist und ein zweiter der zwei Verbinder an einer zweiten Ecke des Batteriemoduls vorgesehen ist.

9. Das Batteriesystem von Anspruch 8, wobei der erste Verbinder ein positiver Anschluss für das Batteriemodul und der zweite Verbinder ein negativer Anschluss für das Batteriemodul ist.

10. Das Batteriesystem von Anspruch 1, wobei das Batteriemodul einen Stiftverbinder aufweist, der für eine Verbindung zu einem Teil der Basis ausgelegt ist.

11. Das Batteriesystem von Anspruch 1, wobei das leitfähige Element einen Anschluss aufweist, der sich von dem Batteriemodul erstreckt.

12. Das Batteriesystem von Anspruch 11, wobei das wenigstens eine Element zum elektrischen Verbinden der Basis mit dem Batteriemodul eine Öffnung aufweist, die zum Aufnehmen des Anschlusses darin ausgelegt ist.

13. Das Batteriesystem von Anspruch 1, wobei das Batteriemodul zwölf Zellen aufweist.

14. Ein Batteriesystem, aufweisend:
ein Batteriemodul (120, 1120), das eine Vielzahl von Lithium-Ionen-Zellen aufweist, die elektrisch miteinander verbunden sind, und wenigstens einen Anschluss, der sich von dem Batteriemodul erstreckt;
eine Basis, die zum Bereitstellen einer elektrischen Verbindung mit dem Batteriemodul ausgelegt ist, wenn das Batteriemodul mechanisch an die Basis gekoppelt ist, wobei zumindest eines von der Basis und dem Batteriemodul eine Befestigungsstruktur (112, 122, 312) aufweist, die für eine Bewegung von einer ersten Position zu einer zweiten Position ausgelegt ist, wobei die Befestigungsstruktur dafür ausgelegt ist, sowohl eine elektrische als auch eine mechanische Kopplung zwischen der Basis und dem Batteriemodul bereitzustellen, wenn die Befestigungsstruktur in der zweiten Position ist.

15. Das Batteriesystem von Anspruch 14, wobei die Befestigungsstruktur einen Schlitz zum Aufnehmen des wenigstens einen Anschlusses aufweist.

16. Das Batteriesystem von Anspruch 15, wobei das Batteriemodul die Befestigungsstruktur aufweist, die für eine Bewegung von einer ersten Position zu einer zweiten Position ausgelegt ist, wobei die Befestigungsstruktur nahe dem wenigstens einen Anschluss vorgesehen ist, wobei die Befestigungsstruktur des Batteriemoduls zur mechanischen Verriegelung mit einer Befestigungsstruktur der Basis ausgelegt ist.

17. Das Batteriesystem von Anspruch 16, wobei die Befestigungsstruktur der Basis für eine mechanische Verriegelung mit der Befestigungsstruktur des Batteriemoduls ausgelegt ist, wenn das Batteriemodul relativ zu der Basis über den wenigstens einen Anschluss rotiert ist.

18. Das Batteriesystem von Anspruch 17, wobei das Batteriemodul einen Griff aufweist und die Basis eine Erweiterung aufweist, die für einen Eingriff mit wenigstens einem Teil des Griffs ausgelegt ist, wenn das Batteriemodul an der Basis gesichert ist.

19. Das Batteriesystem von Anspruch 14, wobei die Befestigungsstruktur ein Riegel ist.

20. Das Batteriesystem von Anspruch 14, wobei das Batteriemodul eine Erweiterung zum Verbinden mit der Basis aufweist und die Basis einen Kontakt zum Herstellen eines elektrischen Kontaktes mit dem wenigstens einen Anschluss aufweist.

21. Das Batteriesystem von Anspruch 14, wobei das Batteriemodul einen Griff aufweist, der für eine Bewegung relativ zu dem Batteriemodul ausgelegt ist, wobei der Griff zum Verriegeln mit der Basis ausgelegt ist und wenigstens einen Kontakt zum elektrischen Verbinden des wenigstens einen Anschlusses mit der Basis aufweist.

22. Das Batteriesystem von Anspruch 21, wobei der wenigstens eine Anschluss ein Anschluss einer Zelle ist, die in dem Modul enthalten ist.

23. Das Batteriesystem von Anspruch 21, wobei der Griff eine Nockenverriegelung aufweist, die für einen Eingriff mit der Befestigungsstruktur der Basis ausgelegt ist.

24. Das Batteriesystem von Anspruch 14, wobei die Befestigungsstruktur einen Riegel aufweist.

25. Das Batteriesystem von Anspruch 14, wobei die Befestigungsstruktur einen Andrücker aufweist, der eine Vielzahl von Kontakten zum Kontaktieren einer Vielzahl von Anschlüssen des Batteriemoduls aufweist.

26. Das Batteriesystem von Anspruch 14, wobei das Batteriemodul zwölf Zellen aufweist.

## Revendications

1. Système de batterie, comprenant :
un module de batterie (120, 1120) comprenant une pluralité d'accumulateurs au lithium-ion reliés électriquement en série, le module de batterie comprenant un élément conducteur (1023, 1025) servant à relier électriquement le module de batterie à d'autres éléments dans le système de batterie ;
un socle (110) conçu pour fixer en place le module de batterie et comprenant au moins un élément servant à relier électriquement le socle à l'élément conducteur du module de batterie ;
lequel socle comprend un bras rotatif (250, 260) servant à fixer en place le module de batterie par rapport au socle ;
lequel élément conducteur est conçu pour venir au contact dudit au moins un élément servant à relier électriquement le socle au module de batterie lorsque le bras rotatif est positionné de manière à fixer en place le module de batterie par rapport au socle.

2. Système de batterie selon la revendication 1, la pluralité d'accumulateurs dans le module de batterie présentant une forme généralement ovale.

3. Système de batterie selon la revendication 1, le bras rotatif étant conçu pour être mobile entre une première position dans laquelle il ne fixe pas en place le module de batterie et une deuxième position dans laquelle il fixe en place le module de batterie.

4. Système de batterie selon la revendication 3, le bras rotatif étant conçu pour être mobile entre la première position et la deuxième position lorsque le module de batterie vient au contact d'une partie du bras rotatif.

5. Système de batterie selon la revendication 3, le bras rotatif étant sollicité en direction de la deuxième position.

6. Système de batterie selon la revendication 1, ledit au moins un élément servant à relier le module de batterie au système de batterie comprenant un connecteur situé au niveau d'un coin du module de batterie.

7. Système de batterie selon la revendication 6, le connecteur comprenant une pluralité de protubérances agencées orthogonalement au niveau du coin du module de batterie.

8. Système de batterie selon la revendication 7, le module de batterie comprenant deux connecteurs comprenant une pluralité de protubérances agencées orthogonalement, un premier des deux connecteurs étant situé au niveau d'un premier coin du module de batterie et un deuxième des deux connecteurs étant situé au niveau d'un deuxième coin du module de batterie.

9. Système de batterie selon la revendication 8, le premier connecteur étant une borne positive pour le module de batterie et le deuxième connecteur étant une borne négative pour le module de batterie.

10. Système de batterie selon la revendication 1, le module de batterie comprenant un connecteur à broches conçu pour être connecté à une partie du socle.

11. Système de batterie selon la revendication 1, l'élément conducteur comprenant une borne faisant saillie du module de batterie.

12. Système de batterie selon la revendication 11, ledit au moins un élément servant à relier électriquement le socle au module de batterie comprenant une ouverture conçue accueillir la borne.

13. Système de batterie selon la revendication 1, le module de batterie comprenant douze accumulateurs.

14. Système de batterie, comprenant :
un module de batterie (120, 1120) comprenant une pluralité d'accumulateurs au lithium-ion reliés électriquement les uns aux autres et au moins une borne faisant saillie du module de batterie ;
un socle conçu pour établir une liaison électrique avec le module de batterie lorsque le module de batterie est accouplé mécaniquement au socle, le socle et/ou le module de batterie comprenant une structure de montage (112, 122, 312) conçue pour être mobile entre une première position et une deuxième position, la structure de montage étant conçue pour réaliser une liaison à la fois électrique et mécanique entre le socle et le module de batterie lorsque la structure de montage occupe la deuxième position.

15. Système de batterie selon la revendication 14, la structure de montage comprenant une fente servant à recevoir ladite au moins une borne.

16. Système de batterie selon la revendication 15, le module de batterie comprenant la structure de montage conçue pour être mobile entre une première position et une deuxième position, la structure de montage étant située à proximité de ladite au moins une borne, la structure de montage du module de batterie étant conçue pour s'enclencher mécaniquement de manière solidaire avec une structure de montage du socle.

17. Système de batterie selon la revendication 16, la structure de montage du socle étant conçue pour s'enclencher mécaniquement de manière solidaire avec la structure de montage du module de batterie lorsque le module de batterie subit un mouvement de rotation autour de ladite au moins une borne par rapport au socle.

18. Système de batterie selon la revendication 17, le module de batterie comprenant une poignée et le socle comprenant une protubérance conçue pour coopérer avec une partie au moins de la poignée lorsque le module de batterie est fixé au socle.

19. Système de batterie selon la revendication 14, la structure de montage étant un cliquet.

20. Système de batterie selon la revendication 14, le module de batterie comprenant une protubérance servant à s'accoupler au socle et le socle comprenant un contact servant à établir un contact électrique avec ladite au moins une borne.

21. Système de batterie selon la revendication 14, le module de batterie comprenant une poignée conçue pour être mobile par rapport au module de batterie, la poignée étant conçue pour s'enclencher de manière solidaire avec le socle et comprenant au moins un contact servant à relier électriquement ladite au moins une borne au socle.

22. Système de batterie selon la revendication 21, ladite au moins une borne étant une borne d'un accumulateur contenu dans le module.

23. Système de batterie selon la revendication 21, la poignée comprenant un raccord rapide type Camlock conçu pour coopérer avec la structure de montage du socle.

24. Système de batterie selon la revendication 14, la structure de montage comprenant un cliquet.

25. Système de batterie selon la revendication 14, la structure de montage comprenant un élément de maintien comprenant une pluralité de contacts destinés à venir au contact d'une pluralité de bornes du module de batterie.

26. Système de batterie selon la revendication 14, le module de batterie comprenant douze accumulateurs.
